# EUROPEAN PATENT SPECIFICATION

(11) **EP 1 895 193 B1**
(45) Date of publication and mention of the grant of the patent: **23.12.2009**
(21) Application number: 07253422.5
(22) Date of filing: 30.08.2007
(51) Int. Cl.: F16H 9/18, F16H 55/56, F16H 9/16, F16H 61/662, F16H 63/06

(54) **Belt type continuously variable transmission**
Stufenloses Riemengetriebe
Transmission variable continue par type courroie

(30) Priority: 30.08.2006 JP 2006233811
(43) Date of publication of application: 05.03.2008
(73) Proprietor: Yamaha Hatsudoki Kabushiki Kaisha, Iwata-shi, Shizuoka-ken 438-8501 (JP)
(72) Inventor: Sugitani, Tsuyoshi, Iwata-shi, Shizuoka-ken 438-8501 (JP)
(74) Representative: Lamb, Martin John Carstairs

(56) References cited:
- EP-A- 0 321 921
- DE-A1- 19 622 108
- JP-A- 2005 133 929
- US-A1- 2002 142 870

## Description

### FIELD OF THE INVENTION

The present invention relates to a belt type continuously variable transmission for continuously controlling transmission gear ratio by contacting a belt with a V-groove of a driving pulley and a driven pulley according to the preamble of claim 1 and as it is disclosed in US 20020142870 A. The transmission may be utilized in a straddle type vehicle.

### BACKGROUND OF THE INVENTION

A V-belt type continuously variable transmission is widely used for straddle type vehicles such as motorcycles of a scooter type. The V-belt type continuously variable transmission has a driving pulley coupled with a driving power source such as an engine and a driven pulley connected with a driving wheel by way of a final-drive mechanism and so forth, in which a V-belt is contacted with both pulleys, a groove width adjusting mechanism changes the width of each pulley for adjusting the diameter of each pulley for contacting with the V-belt, and a transmission gear ratio between both pulleys is continuously adjusted.

Usually, the driving pulley and the driven pulley are each formed with a fixed pulley and a movable pulley for forming a V-groove between these pulleys. Each movable pulley is provided for moving in the direction of the supporting shaft. The groove width adjusting mechanism moves the movable pulley to adjust transmission gear ratio continuously.

A conventional V-belt type continuously variable transmission of this kind uses an electric motor for moving the movable pulley on the side of the driving pulley for adjusting the groove width. As a moving thrust of the electric motor is capable of moving the movable pulley in both of the direction for narrowing the groove width (Top side) and the direction of widening the groove width (Low side) of the driving pulley, the groove width can be arbitrarily adjusted.

When the electric motor is used for moving the movable pulley, the control of transmission gear ratio is executed by detecting a driving state of the engine based on the engine speed and the throttle opening. To confirm whether actual transmission gear ratio is an appropriate value or not, the position of each movable pulley is detected and the rotational speed of the driven pulley is detected.

As a method for detecting the rotational speed of the driven pulley, a method is known such that an iron plate is attached to the driven pulley and a magnetic sensor detects the rotation of the plate, as described in JP-A-2005-133929 (Patent Document 1).

For example, in the continuously variable transmission in Patent Document 1, a sensor plate is provided on the side of the driven pulley. This sensor plate has a detected part protruding on a circumference of the sensor plate and a disk for attaching the detected part to the fixed pulley on the side of the driven pulley, in which a magnetic sensor is placed facing the detected part. As an output of the magnetic sensor varies according to changes in the shape of the detected part, it is possible to detect a rotational speed of the driven pulley. As a result, because the driven pulley can be made of a non-ferrous material, it is possible to reduce the weight.

However, when the continuously variable transmission has the sensor plate made of iron and attached to the side of the driven pulley as described in Patent Document 1, even if it is possible to reduce the weight of the driven pulley, it is inevitable that the weight of the whole apparatus including the sensor plate increases. In addition, there is a problem where the size of the transmission becomes larger in the direction of the axis of rotation by the amount necessary for attaching the sensor plate. In addition, the structure of the transmission is complex, thus increasing the number of parts.

The present invention has been made in view of such a problem, and an object of at least one embodiment of the invention is to provide a belt type continuously variable transmission using a magnetic sensor for measuring a rotational speed of a driven pulley, in which the rotational speed is measured by a simple structure and further weight reduction is realized.

DE 196 22 108 A1 describes a process for controlling a continuously variable transmission (CVT). The CVT comprises a primary bevel pulley pair on the input side, a belt and a second bevel pulley pair on the output side. Each pulley pair consists of one fixed and one movable pulley. The moving radius of the belt, and thus the ratio, are determined by the axial position of the movable bevel pulley. An electronic control device receives speed signals from detectors located adjacent the pulleys.

### SUMMARY OF THE INVENTION

The belt type continuously variable transmission according to a first aspect of the present invention is a belt type continuously variable transmission for continuously controlling transmission gear ratio by changing a groove width of a driving pulley and a driven pulley, in which the rotational speed of the driven pulley is measured by a magnetic sensor for sensing a magnetic material, the magnetic sensor detects a plurality of detected parts provided to the driven pulley, and the respective detected parts are independently provided on an outer circumference of the driven pulley, and wherein at least an outer circumference of the driven pulley is made of a non-magnetic material, namely aluminium.

Pins containing a magnetic material may be mounted to the outer circumference of the driven pulley, and a rotational speed of the driven pulley measured by a magnetic sensor for sensing the pins.

In one embodiment of the invention, the pin is a stepped pin.

In one embodiment of the invention, the pin is a bolt.

In one embodiment of the invention, the pin is mounted in the direction of an axis of rotation of the driven pulley.

In one embodiment of the invention, an end of the pin is formed into a corner.

Magnetic sheets containing a magnetic material may be attached to the outer circumference of the driven pulley, and a rotational speed of the driven pulley measured by a magnetic sensor for sensing the magnetic sheets.

A magnetic paste containing a magnetic material may be embedded in the outer circumference of the driven pulley, and a rotational speed of the driven pulley measured by a magnetic sensor for sensing the magnetic paste.

When the belt type continuously variable transmission according to the present invention is used, the pins or other detected parts containing a magnetic material are mounted to the outer circumference of the driven pulley, and the rotational speed of the driven pulley is measured by the magnetic sensor for sensing the pins. In other words, in the continuously variable transmission according to the present invention, the detected parts (pins) of the magnetic sensor are independently provided on an outer circumference of the driven pulley made of a non-magnetic material.

Because the driven pulley is made of a non-magnetic material, it is possible to reduce the weight of the transmission compared to a case where a driven pulley made of iron is used.

In addition, because the detected parts of the magnetic sensor are independently provided on the outer circumference of the driven pulley, it is possible to directly measure the rotational speed of the driven pulley. Therefore, a heavy member, such as a disk part of the sensor plate, is not necessarily interposed between the driven pulley and the detected part. Consequently, the weight of the transmission can be further reduced.

An embodiment according to the present invention will be described herein after with reference to accompanying drawings. In the drawings, in order to make the description clear, components having practically the same function are indicated with the same reference numeral. However, the present invention is not limited to the following embodiment.

### BRIEF DESCRIPTION OF THE DRAWINGS

FIG. 1(a) is a schematic external side view of a driven pulley 10 of a continuously variable transmission 100 according to the embodiment of the invention, when viewed from the inside of a vehicle. FIG. 1(b) is a schematic sectional view illustrating a section taken along the line A-A in FIG. 1(a).
FIG. 2 is a schematic internal sectional view of a rear part of the continuously variable transmission 100, when viewed from the upper side of the vehicle body.
FIG. 3(a) is a schematic sectional view in which a stepped pin 22 is mounted to a fixed pulley 12. FIG. 3(b) is an external top plan view of the stepped pin 22. FIG. 3(c) is an external side view of the stepped pin 22.
FIG. 4(a) is a schematic sectional view in which a bolt 24 is mounted to the fixed pulley 12. FIG. 4(b) is an external top plan view of the bolt 24. FIG. 4(c) is an external side view of the bolt 24.
FIG. 5(a) is a schematic sectional view of a detected part made of a magnetic sheet. FIG. 5(b) is a schematic sectional view of the detected part made of a magnetic paste.

### DETAILED DESCRIPTION OF THE DRAWINGS

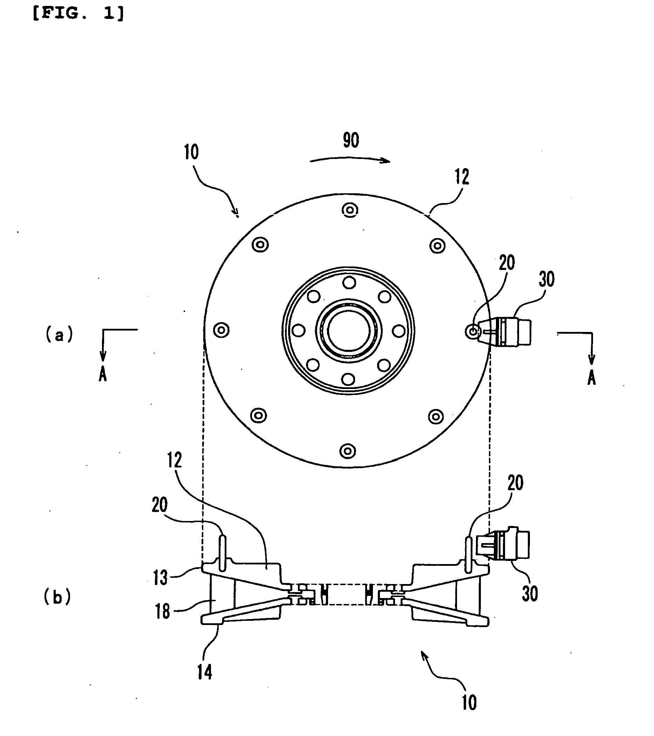

FIG. 1(a) is a schematic external side view of a driven pulley 10 of a continuously variable transmission 100 according to the embodiment of the invention, when viewed from the inside of a vehicle or viewed from the side of a fixed pulley 12. FIG. 1(b) is a schematic sectional view illustrating a section taken along the line A-A in FIG. 1(a). The continuously variable transmission 100 controls transmission gear ratio continuously by changing a groove width between a driving pulley (not shown) and the driven pulley 10.

The continuously variable transmission 100 on the side of the driven pulley 10 will be described with reference to FIGs. 1(a) and 1(b). The driven pulley 10 according to the embodiment is structured with the fixed pulley 12 and a movable pulley 14, forming a V-groove between the pulleys, and a V-belt 18 is routed around the fixed pulley 12 and the movable pulley 14. The movable pulley 14 is provided for movement in the direction of a supporting shaft 16 for supporting the movable pulley, and the groove width on the side of the driven pulley 10 is changed by moving this movable pulley 14.

The driven pulley 10 is made of a non-magnetic material. In particular, aluminum is used as a non-magnetic material in order to reduce the weight of the driven pulley 10. In addition, a pin 20 or multiple pins 20 containing a magnetic material are mounted to an outer circumference of the driven pulley 10. In the example in the drawing, the pins 20 are formed on the side of the fixed pulley 12. The total eight pins 20 are mounted along the outer circumference of the fixed pulley 12 at regular intervals in a ring form. Each pin 20 is made of iron and shaped into a cylinder.

A magnetic sensor 30 for detecting the rotational speed of the driven pulley 10 is placed in the transmission 100. The magnetic sensor 30 senses the magnetic material contained in the pin 20. The magnetic sensor 30 in the embodiment is placed facing an end of the pin 20 formed on the outer circumference of the fixed pulley 12. This magnetic sensor 30 senses the iron content contained in each pin 20.

When the fixed pulley 12 rotates in the direction of an arrow 90, each pin 20 moves in the same direction as the rotation of the fixed pulley 12, and passes immediately in front of the magnetic sensor 30 one by one. When each pin 20 passes immediately in front of the magnetic sensor 30, the magnetic sensor 30 senses each pin 20 and outputs a signal. It is possible to measure the rotational speed of the driven pulley 10 by measuring an interval of output signals.

When the belt type continuously variable transmission 100 is used, the driven pulley 10 is made of a non-magnetic material, the pin 20 containing a magnetic material is attached to the outer circumference of the driven pulley 10, and the rotational speed of the driven pulley 10 is measured by the magnetic sensor 30 for sensing the pin 20. In other words, in the continuously variable transmission 100 a detected part (pin 20) of the magnetic sensor 30 is independently provided on the outer circumference of the driven pulley 10 made of a non-magnetic material.

Because the driven pulley 10 is made of a non-magnetic material, it is possible to reduce the weight of the transmission 100, compared to a case where a driven pulley made of iron is used.

In addition, because the detected part of the magnetic sensor 30 is independently mounted on the outer circumference of the driven pulley 10, it is possible to directly measure the rotational speed of the driven pulley 10. Therefore, a heavy member, such as a disk part of the sensor plate, is not necessarily interposed between the driven pulley 10 and the detected part. Consequently, the weight of the transmission 100 can be further reduced.

In addition, because the detected part is independently provided to the driven pulley 10, it is possible to measure the rotational speed by a very simple structure, to reduce the size of the transmission in the direction of the axis of rotation by an amount of the unnecessary sensor plate, and to reduce the cost.

In this embodiment, the pin 20 is mounted to the outer circumference of the driven pulley 10. However, it is possible to appropriately decide the position of the pin 20 depending on a product. For example, it is possible to mount the pin 20 to a position outside a half of the radius of the driven pulley 10. It is also possible to locate the pin 20 in a position inside of the position shown in the example in the radius direction, or to mount the pin 20 to an outer end surface 13 of the driven pulley 10.

The driven pulley 10 according to the embodiment is made of a non-magnetic material. However, at least the outer circumference of the driven pulley 10 may be made of a non-magnetic material, and a magnetic material may be partly used. For example, it is possible to use a magnetic material (for example, a bolt) for a fixing member for fixing the driven pulley 10 to a hub.

In this embodiment, the pin 20 made of iron is used. However, if sensed by the magnetic sensor 30, a magnetic material other than iron can be used to form the pin 20. It is also possible to use a non-magnetic material containing a magnetic material. As a magnetic material other than iron, for example, nickel, ferritic stainless, sintered material, and so forth can be used.

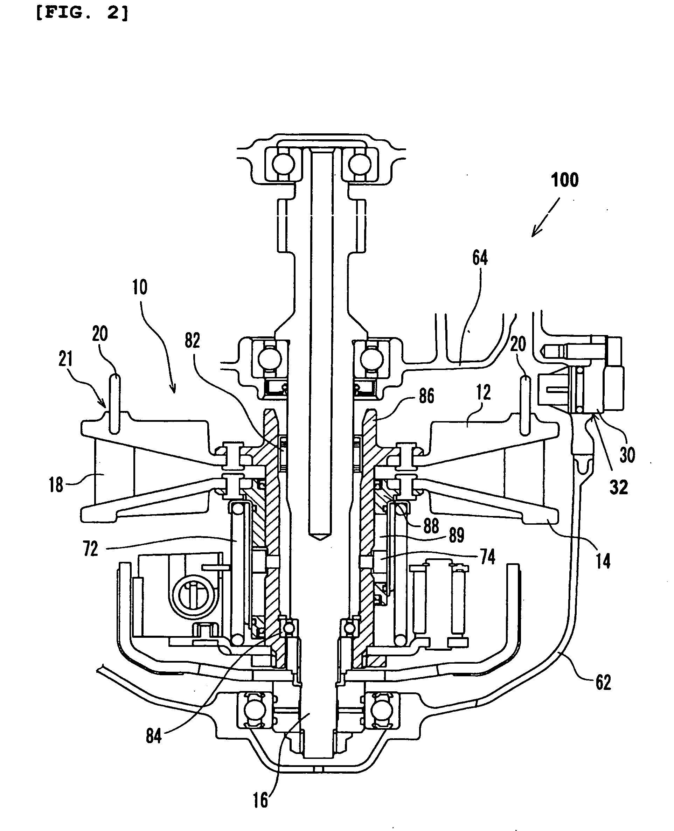

The transmission mechanism of the continuously variable transmission 100 according to the embodiment will be now described with reference to FIG. 2 in detail with respect to the side of the driven pulley 10. FIG. 2 is a schematic internal sectional view of a rear part of the continuously variable transmission 100, when viewed from the upper side of the vehicle body, in which the structure around the driven pulley 10 is shown. The driven pulley 10 is located between a belt chamber cover 62, which forms an external of the continuously variable transmission 100, and a transmission case 64 for housing a decelerator (not shown). The driven pulley 10 includes the fixed pulley 12 and the movable pulley 14. Both the fixed pulley 12 and the movable pulley 14 are supported by the supporting shaft 16. Specifically, the fixed pulley 12 is supported by the supporting shaft 16 with a bearing 82 fitted into the outer circumference of the middle part of the supporting shaft 16 in the longitudinal direction and with a bearing 84 provided on the outer side in the vehicle body than the bearing 82 or on the lower side of the supporting shaft 16 in FIG. 2 by way of a hub 86. On the other hand, the movable pulley 14 is supported by the supporting shaft 16 by way of a hub 88 formed on an outer circumference of the hub 86. The movable pulley 14 is provided for movement the longitudinal direction of the supporting shaft 16 and biased in the direction for narrowing the groove width of the driven pulley 10 by the force of a spring 72 or biased toward the fixed pulley 12.

In the movable pulley 14 according to the embodiment of the invention, a torque cam mechanism is formed, which applies a thrust in the longitudinal direction of the supporting shaft 16 in accordance with a torque difference between a rotating torque of the supporting shaft 16 and a rotating torque of the movable pulley 14. In other words, a guide pin 74 is formed on the hub 86 on the side of the fixed pulley, a cam groove 89 is formed on the hub 88 on the side of the movable pulley, and the guide pin 74, which is rotatable integrally with the supporting shaft 16, is inserted into the cam groove 89 in a slidable manner. In this structure, when a torque difference is generated between the rotating torque of the supporting shaft 16 and the rotating torque of the movable pulley 14, the guide pin 74 is held by the cam groove 89. Thus, a thrust is applied in the longitudinal direction of the supporting shaft 16, so that the groove width of the driven pulley 10 is adjusted.

In the continuously variable transmission 100 according to the embodiment of the invention, the groove width of the driving pulley is adjusted by controlling or moving the movable pulley on the side of the driving pulley with an electric motor. On the other hand, on the side of the driven pulley 10, the movable pulley 14 is biased by the spring 72 in the direction in which the groove width is made narrower as mentioned above. The V-belt 18 is routed around the V-groove of the driving pulley and the driven pulley 10.

In the aforementioned structure, when the diameter, around which the V-belt 18 is routed, on the side of the driving pulley becomes larger, the tension applied to the V-belt 18 increases, so that the V-belt 18 on the side of the driven pulley 10 is pulled. When this tension becomes larger than the biasing force applied by the spring 72, the groove width on the side of the driven pulley 10 increases. As a result, the diameter, around which the V-belt is routed, on the side of the driven pulley 10 becomes smaller. In other words, the transmission gear ratio becomes smaller. Thus, a transmission gear ratio is controlled continuously by the continuously variable transmission 100.

The locations of the pin 20 and the magnetic sensor 30 in the embodiment will be next described. The magnetic sensor 30 is attached to the belt chamber cover 62 that forms an external of the continuously variable transmission 100. Specifically, a hole 32 is formed in the belt chamber cover 62, and the magnetic sensor 30 is inserted into the hole 32 from the outside. The magnetic sensor 30 is located facing the end of the pin 20 formed along the outer circumference of the fixed pulley 12. The end of the magnetic sensor 30 and the end of the pin 20 are so close to each other that the magnetic sensor 30 can sense the magnetic material contained in the pin 20. The distance therebetween is set to, for example, one to three millimeters in this embodiment.

The pin 20 to be sensed by the magnetic sensor 30 is mounted in the direction of the axis of rotation of the driven pulley 10 or in the longitudinal direction of the supporting shaft 16. In the example shown in the drawing, the pin 20 is mounted protruding from the side surface of the fixed pulley 12 toward the inside of the vehicle body. Specifically, a recess 21 is formed on an outer circumferential portion of the side surface of the fixed pulley 12, and one end of the pin 20 is press-fitted into the recess 21.

When the pin 20 is mounted in the direction of the axis of rotation of the driven pulley 10, the pin 20 is located perpendicular to the direction of the centrifugal force applied during rotation. Thus, it is possible to prevent the pin 20 from being removed due to the centrifugal force during rotation.

Though the one end of the pin 20 is press-fitted into the recess 21 of the fixed pulley 12 in the embodiment of the invention, the method for mounting the pin 20 is not limited to this. For example, in a process for casting the fixed pulley 12, the one end of the pin 20 may be inserted into a mounting position beforehand for pouring molten metal (for example, aluminum) for forming the fixed pulley into a mold. In this case, a resistance to the removal of the pin can be further intensified.

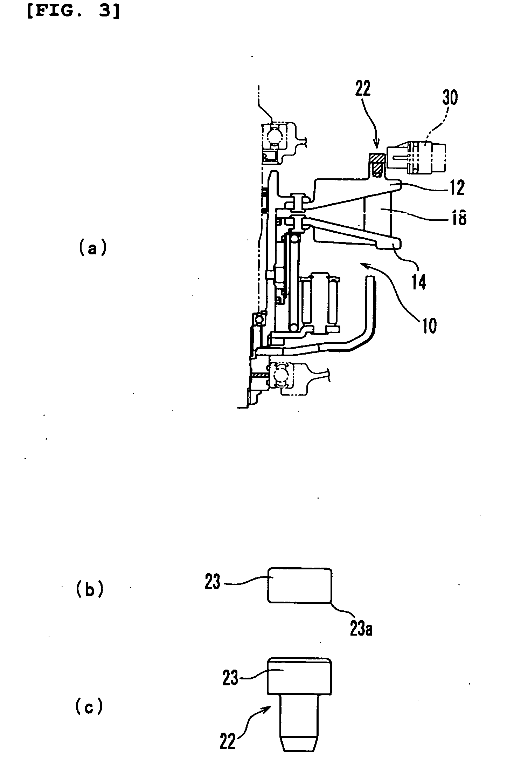

It is only necessary that the pin 20 is formed into a projection to be detected by the magnetic sensor 30, and other shapes can be also included. For example, FIGs. 3(a) to 3(c) show an example where the pin is a stepped pin. FIG. 3(a) is a schematic sectional view in which a stepped pin 22 is mounted to the fixed pulley 12. FIG. 3(b) is an external top plan view of the stepped pin 22. FIG. 3(c) is an external side view of the stepped pin 22. Because even a shape similar to the shape of the stepped pin 22 is sensed by the magnetic sensor 30, it is possible to detect the rotational speed of the driven pulley 10, while the weight of the transmission is reduced.

When the stepped pin 22 is used, it is preferable that the shape of the end of the pin or the shape of a head 23 is in a square shape. In the example shown in FIG. 3(b), the shape of the head 23 is in a rectangular shape. When the end of the pin is formed into a rectangular shape as described above, the difference in the amount of detection by the magnetic sensor 30 between the times before and after an arrival of a corner 23a becomes larger. Thus, the magnetic sensor 30 can make an accurate detection at a reference point (the corner 23a) of the pin.

When the end of the pin is formed into a rectangular shape, it is preferable that the direction of the corner 23a of each pin is arranged in the same direction relative to the magnetic sensor 30, so that the detection timing of the reference point of the pin does not fluctuate.

In the embodiment of the invention, though the head 23 is in a rectangular shape, if a part of the head coming close to the magnetic sensor 30 includes a square corner, the magnetic sensor 30 can detect the reference point of the pin. Thus, it is possible that another part of the head 23, except the square corner, may be in a different shape. For example, the head may be in a shape of a sector.

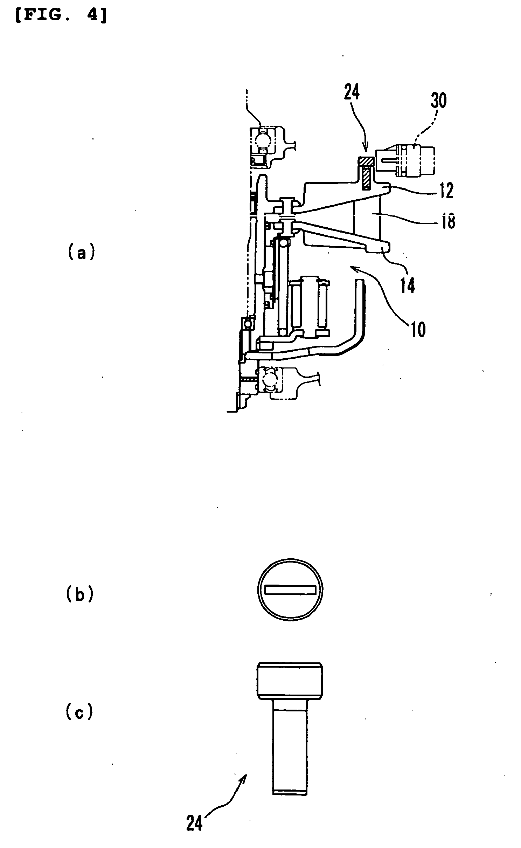

FIG. 4 (a) to 4(c) show an example where a bolt is used in place of a pin. FIG. 4(a) is a schematic sectional view in which a bolt 24 is mounted to the fixed pulley 12. FIG. 4(b) is an external top plan view of the bolt 24. FIG. 4(c) is an external side view of the bolt 24. When the bolt 24 is used, the fixation thereof to the fixed pulley 12 is more rigid than the case where the pin 22 is press-fitted into a position. Thus, the bolt is less likely to be removed. For example, when a pin is press-fitted into a position, the pin is removed by the force of about 300N. On the other hand, when a bolt is used, the bolt is not removed until the force is as large as about 1000N. The bolt offers resistance to the removal three times as high as the pin does.

When the bolt 24 is used in place of a pin, it is preferable that an end of the bolt 24 is in a circle shape as shown in FIG. 4(b). This is because, assuming that the end of the bolt is in a polygonal shape (for example, square, hexagon and so forth), the orientation of the corners of each bolt relative to the magnetic sensor 30 varies depending on the degree of the fixation of the bolt, thus causing an erroneous detection of the reference point (the corner).

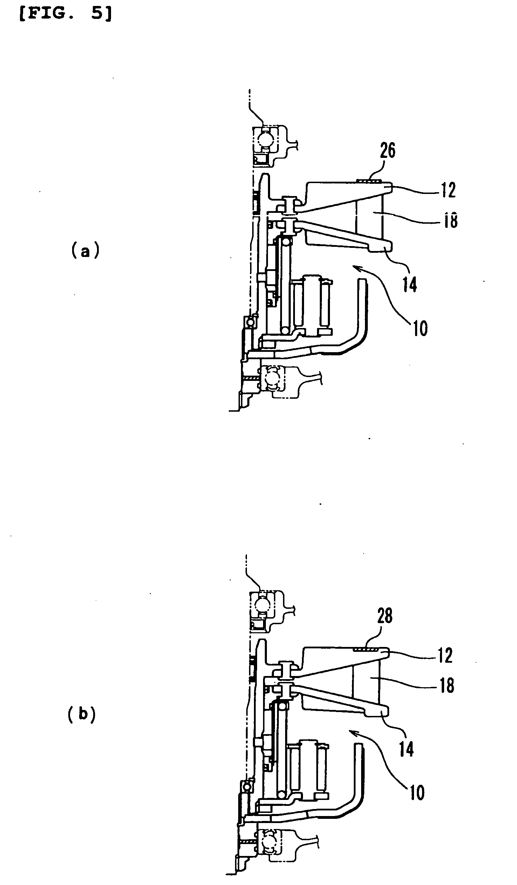

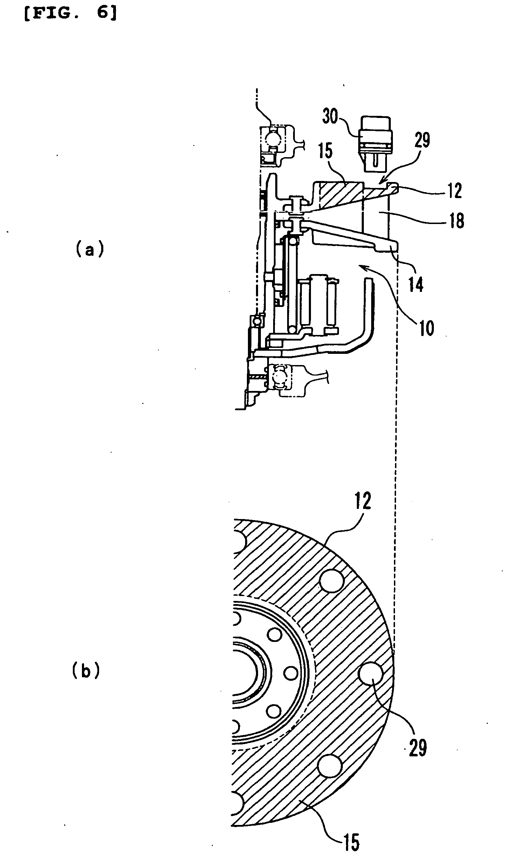

The embodiment of the invention is **characterized in that** the pin 20 containing a magnetic material to be sensed by the magnetic sensor 30 is mounted to an outer circumference of the driven pulley 10. However, if a portion of magnetic material to be sensed by the magnetic sensor 30 is formed on the outer circumference of the driven pulley 10 or if the detected part of the magnetic sensor 30 is independently provided on the outer circumference of the driven pulley 10, the detected part is not necessarily in the form of a pin. For example, the detected part may be a magnetic sheet as shown in FIG. 5(a) or a magnetic paste as shown in FIG. 5(b).

As shown in FIG. 5 (a), when the detected part is a magnetic sheet 26, it is only necessary to attach the sheet 26 to the outer circumference of the fixed pulley 12. Therefore, the assembly is easy. In addition, because the weight of the sheet is very light, compared to the weight of a pin, a bolt, or the like, it is possible to further reduce the weight.

As the magnetic sheet 26 used in the embodiment of the invention, for example, metallic magnetic powder, which is dispersed in a resin and formed in a sheet, is used. It is also possible to attach a magnet sheet to the outer circumference of the fixed pulley 12 to be detected by the magnetic sensor 30.

As shown in FIG. 5(b), the detected part may be a magnetic paste 28. In the example in the drawing, a recess is formed on the outer circumference of the fixed pulley 12 made of aluminum, and the magnetic paste 28 is embedded in the recess. In addition to realizing the weight reduction due to providing the recess on the outer circumference of the fixed pulley 12, it is also possible to avoid a situation where the magnetic paste 28 comes off since the magnetic paste is embedded in the driven pulley.

As the magnetic paste used in the embodiment of the invention, for example, a resin paste mixed with metallic magnetic powder is used.

The present invention has been described with reference to appropriate embodiments. However, the present invention is not limited to these embodiments but can be modified in various ways.

According to embodiments of the present invention, it is possible to measure a rotational speed by a simple structure and to reduce the weight in a belt type continuously variable transmission in which the measurement is achieved by using a magnetic sensor.

### Description of Reference Numerals and Symbols

10: driven pulley
12: fixed pulley
13: outer side end surface
14: movable pulley
15: outer circumference
16: supporting shaft
18: belt
20: pin
21: recess
22: stepped pin
23a: corner
23: head
24: bolt
26: magnetic sheet
28: magnetic paste
30: magnetic sensor
32: hole
62: belt chamber cover
64: transmission case
72: spring
74: guide pin
82: bearing
84: bearing
86: hub
88: hub
89: cam groove
90: rotational direction
100: belt type continuously variable transmission

## Claims

1. A belt type continuously variable transmission for continuously controlling transmission gear ratio by changing a groove width of a driving pulley and a driven pulley,
wherein the rotational speed of the driven pulley (30) is measured by a magnetic sensor (30) for sensing a magnetic material,
the magnetic sensor detects a plurality of detected parts (20;22;24;26;28) provided on the driven pulley (10), and
**characterized in that**
the respective detected parts (20;22;24;26;28) are independently provided on an outer circumference of the driven pulley (10), wherein at least said outer circumference of the driven pulley (10) is made of aluminium.

2. The belt type continuously variable transmission according to claim 1, wherein
a pin (20) comprising a magnetic material is mounted to the outer circumference of the driven pulley (10), and
the rotational speed of the driven pulley (10) is measured by the magnetic sensor (30) sensing the pin (20).

3. The belt type continuously variable transmission according to Claim 2, wherein the pin is a stepped pin (22).

4. The belt type continuously variable transmission according to Claim 2, wherein the pin is a bolt (24).

5. The belt type continuously variable transmission according to Claim 2, wherein the pin (20) is mounted in the direction of an axis of rotation of the driven pulley (10).

6. The belt type continuously variable transmission according to Claim 2, 3 or 5, wherein an end of the pin (22) is formed into a corner (23a).

7. The belt type continuously variable transmission according to claim 1, wherein:
a magnetic sheet (26) comprising a magnetic material is provided on the outer circumference of the driven pulley (10), and
the rotational speed of the driven pulley (10) is measured by the magnetic sensor (30) for sensing the magnetic sheet (26).

8. The belt type continuously variable transmission according to claim 1, wherein:
a magnetic paste (28) comprising a magnetic material is provided on the outer circumference of the driven pulley (10), and
the rotational speed of the driven pulley (10) is measured by the magnetic sensor (30) for sensing the magnetic paste (28).

## Patentansprüche

1. Stufenloses Riemengetriebe für das stufenlose Steuern des Getriebeübersetzungsverhältnisses durch Verändern einer Rillenbreite einer Antriebsriemenscheibe und einer Abtriebsscheibe,
wobei die Umdrehungsgeschwindigkeit der Abtriebsscheibe (10) mittels eines magnetischen Sensors (30) für das Erfassen eines magnetischen Materials gemessen wird,
wobei der magnetische Sensor eine Vielzahl von Erkennungsteilen (20; 22; 24; 26; 28) nachweist, die auf der Abtriebsscheibe (10) vorhanden sind, und
**dadurch gekennzeichnet, dass** die jeweiligen Erkennungsteile (20; 22; 24; 26; 28) unabhängig auf einem äußeren Umfang der Abtriebsscheibe (10) vorhanden sind, wobei mindestens der äußere Umfang der Abtriebsscheibe (10) aus Aluminium besteht.

2. Stufenloses Riemengetriebe nach Anspruch 1, bei dem:
ein Stift (20), der ein magnetisches Material aufweist, am äußeren Umfang der Abtriebsscheibe (10) montiert ist, und
die Umdrehungsgeschwindigkeit der Abtriebsscheibe (10) mittels des magnetischen Sensors (30) gemessen wird, der den Stift (20) erfasst.

3. Stufenloses Riemengetriebe nach Anspruch 2, bei dem der Stift ein abgestufter Stift (22) ist.

4. Stufenloses Riemengetriebe nach Anspruch 2, bei dem der Stift ein Schraubenbolzen (24) ist.

5. Stufenloses Riemengetriebe nach Anspruch 2, bei dem der Stift (20) in der Richtung einer Rotationsachse der Abtriebsscheibe (10) montiert ist.

6. Stufenloses Riemengetriebe nach Anspruch 2, 3 oder 5, bei dem ein Ende des Stiftes (22) zu einer Ecke (23a) ausgebildet ist.

7. Stufenloses Riemengetriebe nach Anspruch 1, bei dem:
ein magnetisches Blech (26), das ein magnetisches Material aufweist, auf dem äußeren Umfang der Abtriebsscheibe (10) vorhanden ist, und
die Umdrehungsgeschwindigkeit der Abtriebsscheibe (10) mittels des magnetischen Sensors (30) für das Erfassen des magnetischen Bleches (26) gemessen wird.

8. Stufenloses Riemengetriebe nach Anspruch 1, bei dem:
eine magnetische Masse (28), die ein magnetisches Material aufweist, auf dem äußeren Umfang der Abtriebsscheibe (10) vorhanden ist, und
die Umdrehungsgeschwindigkeit der Abtriebsscheibe (10) mittels des magnetischen Sensors (30) für das Erfassen der magnetischen Masse (28) gemessen wird.

## Revendications

1. Transmission à variation continue du type à courroie destinée à assurer un contrôle continu du rapport d'engrenage de transmission en changeant la largeur d'une rainure d'une poulie d'entraînement et d'une poulie entraînée ;
dans laquelle la vitesse de rotation de la poulie entraînée (10) est mesurée par un capteur magnétique (30), pour détecter un matériau magnétique ;
le capteur magnétique détectant plusieurs parties détectées (20 ; 22 ; 24 ; 26 ; 28) agencées sur la poulie entraînée (10) ; et
**caractérisée en ce que** les parties détectées respectives (20 ; 22 ; 24 ; 26 ; 28) sont agencées indépendamment sur une circonférence externe de la poulie entraînée (10), au moins ladite circonférence externe de la poulie entraînée (10) étant composée d'aluminium.

2. Transmission à variation continue du type à courroie selon la revendication 1, dans laquelle :
une broche (20), comprenant un matériau magnétique, est montée sur la circonférence externe de la poulie entraînée (10) ; et
la vitesse de rotation de la poulie entraînée (10) est mesurée par le capteur magnétique (30), détectant la broche (20).

3. Transmission à variation continue du type à courroie selon la revendication 2, dans laquelle la broche est constituée par une broche étagée (22).

4. Transmission à variation continue du type à courroie selon la revendication 2, dans laquelle la broche est constituée par un boulon (24).

5. Transmission à variation continue du type à courroie selon la revendication 2, dans laquelle la broche (20) est montée dans la direction d'un axe de rotation de la poulie entraînée (10).

6. Transmission à variation continue du type à courroie selon les revendications 2, 3 ou 5, dans laquelle une extrémité de la broche (22) est formée en un coin (23a).

7. Transmission à variation continue du type à courroie selon la revendication 1, dans laquelle :
une feuille magnétique (26), comprenant un matériau magnétique, est agencée sur la circonférence externe de la poulie entraînée (10) ; et
la vitesse de rotation de la poulie entraînée (10) est mesurée par le capteur magnétique (30), pour détecter la feuille magnétique (26).

8. Transmission à variation continue du type à courroie selon la revendication 1, dans laquelle :
une pâte magnétique (28), comprenant un matériau magnétique, est agencée sur la circonférence externe de la poulie entraînée (10) ; et
la vitesse de rotation de la poulie entraînée (10) est mesurée par le capteur magnétique (30), pour détecter la pâte magnétique
